# EUROPÄISCHE PATENTSCHRIFT

(11) **EP 1 206 030 B1**
(45) Veröffentlichungstag und Bekanntmachung des Hinweises auf die Patenterteilung: **06.08.2014**
(21) Anmeldenummer: 01126392.8
(22) Anmeldetag: 07.11.2001
(51) Int. Cl.: H02P 27/06

(54) **Verfahren zum Betreiben eines frequenzumrichtergesteuerten Elektromotors sowie ein Motoraggregat mit integriertem Frequenzumrichtermotor**
Method of running an inverter controlled electric motor and motor arrangement integrating an inverter controlled electric motor
Méthode d'opération d'un moteur électrique piloté par convertisseur de fréquence et groupe moteur intégrant un moteur électrique piloté par convertisseur

(30) Priorität: 09.11.2000 DE 10055407
(43) Veröffentlichungstag der Anmeldung: 15.05.2002
(73) Patentinhaber: GRUNDFOS A/S, DK-8850 Bjerringbro (DK)
(72) Erfinder: Petersen, Niels Hogolt, 8850 Bjerringbro (DK); Vaastrup, Pierre, 8381 Mundelstrup (DK)
(74) Vertreter: Vollmann, Heiko

(56) Entgegenhaltungen:
- EP-A- 1 077 527
- WO-A-00/14863
- WO-A-90/01828
- DE-A- 3 150 396
- DE-A- 19 943 663
- DE-A1- 3 914 342
- DE-A1- 19 650 403
- DE-A1- 19 835 576
- DE-A1- 19 846 079
- DE-A1- 19 946 428
- US-A- 4 475 631
- US-A- 5 629 598
- US-B1- 6 262 555
- "Kapitel 3 : Drehstrom-Asynchronmotoren ED - Werner Boehm", 1 January 1996 (1996-01-01), ELEKTRISCHE ANTRIEBE, WÜRZBURG : VOGEL, PAGE(S) 47 - 66, XP009158135, ISBN: 3-8023-1590-1
- "Elektroantrieben bremsen", INTERNET CITATION, 30 September 2013 (2013-09-30), pages 1/1-1/5, XP009173091, Retrieved from the Internet: URL:http://www.hs-weingarten.de/c/document _library/get_file?uuid=aa34c74e-a781-4cf6- a628-18d17f40f675&groupId=22009 [retrieved on 2013-09-30]

## Beschreibung

Frequenzumrichter werden heutzutage nicht nur für Motoren großer Leistung, sondern auch für solche kleiner Leistung eingesetzt. Dies ist insbesondere zum Antrieb von Kreiselpumpen vorteilhaft, da damit auch beispielsweise Asynchronmotoren kleiner Leistung hochtourig gefahren werden können, wodurch auch Kreiselpumpen kleiner Bauart eine vergleichsweise hohe hydraulische Leistung erbringen können. Der Einsatz solcher Frequenzumrichter bei Motoren kleiner Leistung ist jedoch wirtschaftlich nur dann vertretbar, wenn der Frequenzumrichter zu angemessenen Kosten hergestellt werden kann. Darüber hinaus soll die Baugröße möglichst klein sein, damit der Frequenzumrichter beispielsweise im Klemmenkasten oder auch einem gesonderten Anbaumodul am Motor untergebracht werden kann.

Der Aufbau solcher Frequenzumrichter ist beispielsweise aus Brosch, Peter F. Frequenzumrichter: Prinzip, Aufbau und Einsatz, ISBN3-478-93036-7 bekannt. Der Einsatz eines solchen Frequenzumrichters in Verbindung mit einem Asynchronmotor und einem Kreiselpumpenaggregat ist beispielhaft in DE 196 50 403 A1 beschrieben. Dort ist auch der grundsätzliche Aufbau eines Frequenzumrichters dargestellt. DE 3914342 A1 zeigt die Ansteuerung eines frequenzumrichtergesteuerten Pumpenaggregates im Lastbetrieb.

Ein solcher Frequenzumrichter besteht typischerweise aus einem Gleichrichter (auch als Stromrichter bezeichnet), der den netzseitig zur Verfügung stehenden Wechsel- oder Drehstrom in Gleichstrom umwandelt, einen Zwischenkreis der im Wesentlichen als Energiespeicher bzw. Puffer dient sowie einem Wechselrichter, mit dem der Gleichstrom durch entsprechende Beschaltung in einen Drehstrom praktisch beliebiger Frequenz umgewandelt wird. Der Wechselrichter ist mit den Leitungsanschlüssen des Motors verbunden. Darüber hinaus weist der Frequenzumrichter eine Steuerelektronik auf. Sowohl Gleichrichter als auch Wechselrichter und Steuerelektronik können heutzutage in Halbleiterbautechnik bei entsprechenden Stückzahlen sowohl kostengünstig als auch kleinbauend gefertigt werden. Ein Problem stellt jedoch nach wie vor der Zwischenkreis und dort insbesondere der Kondensator und Leistungswiderstand dar, die vergleichsweise groß dimensioniert sein müssen, um die im System sei es die vom Motor oder die vom Netz kommenden Leistungsspitzen aufzufangen und damit die empfindlichen Halbleiterbausteine vor Überlastung/Zerstörung zu schützen. Zwar ist es bekannt, entsprechende Schalter vorzusehen, die im Überlastfall öffnen, doch handelt es sich hierbei in der Regel um softwareimplementierte Lösungen im Steuerkreis, die aufgrund der gegebenen Rechengeschwindigkeit nur mit einer wenn auch geringen Verzögerung wirksam sein können, weshalb trotz dieser Maßnahmen ein Zwischenkreiskondensator vergleichsweiser hoher Kapazität vorzusehen ist. Ein solcher Zwischenkreiskondensator ist nicht nur teuer, da er als gesondertes Bauteil hergestellt und eingebaut werden muss, er benötigt darüber hinaus auch ein vergleichsweise großen Einbauraum.

Aus DE 19846079 A1 ist es bekannt, mittels einen Asynchronmotor mittels einer Vektorregelung anzusteuern und durch Regelung der Zwischenkreisspannung auf einen Sollwert ueber der ideellen Versorgungsspannung gezielt abzubremsen.

Vor diesem Hintergrund liegt der vorliegenden Erfindung die Aufgabe zu Grunde, ein Verfahren zum Betreiben eines frequenzumrichtergesteuerten Elektromotors, insbesondere zum Antrieb einer Kreiselpumpe zu schaffen, das eine deutliche Reduzierung der Zwischenkreiskapazität ermöglicht. Im Weiteren soll ein Motoraggregat mit integriertem Frequenzumrichter, also ein Kompaktaggregat, insbesondere ein Kreiselpumpenaggregat mit frequenzumrichtergesteuerten Asynchronmotor geschaffen werden, das kostengünstig herstellbar und kompakt bauend ist.

Der verfahrensmäßige Teil dieser Aufgabe wird durch die in Anspruch 1 aufgeführten Merkmale gelöst, der vorrichtungsmäßige durch die in Anspruch 3 genannten. Vorteilhafte Ausgestaltungen der Erfindung sind in den Unteransprüchen sowie in der nachfolgenden Beschreibung angegeben.

Grundgedanke der vorliegenden Erfindung ist es, den Motor stets so anzusteuern, dass die Summe aus seiner mechanischen Leistung und seiner Verlustleistung größer Null ist. Solange diese Bedingung eingehalten wird, ist sicher gestellt, dass keine Leistung vom Motor in den Wechselrichter und darüber in den Zwischenkreis eingespeist wird. Es kann bei einer entsprechenden Ansteuerung und Beibehaltung der sonst üblichen Sicherheitskomponenten, beispielsweise einem Schalter, der bei Überspannung den Gleichrichter schnell genug vom Netz trennt, theoretisch ganz auf den Zwischenkreiskondensator und einen Leistungswiderstand verzichtet werden. In der Praxis wird man hierauf schon aus Sicherheitsgründen nicht verzichten, man kann jedoch den Zwischenkreiskondensator wesentlich kleiner als bisher auslegen, nämlich so, dass er lediglich zu Aufnahme der vom Kommutierungsvorgang ausgehenden und in dem Zwischenkreis gelangenden Energien dimensioniert ist. Darüber hinaus wird ein vergleichsweise kleiner Energiepuffer auch für die vom Gleichrichter in den Zwischenkreis gelangenden Energiespitzen erforderlich sein, die zeitbedingt nicht zurückgehalten werden können.

Da die erfindungsgemäße Ansteuerung so ausgelegt ist, dass stets die Summe aus mechanischer Leistung PM und Verlustleistung PV größer Null ist, kann die Verlustleistung PV gezielt zum Abbremsen des Motors eingesetzt werden, ohne dass die Gefahr besteht, dass Energien in den Zwischenkreis eingespeist wird. Im Übrigen spielt es bei Kreiselpumpen in der Praxis kaum eine Rolle, wenn diese nur langsam zum Stillstand kommen, so dass das vorliegenden Ansteuerverfahren in der Praxis keine Nachteile aufweist.

Um einen gewissen Sicherheitsfaktor gegen Überlastung des Zwischenkreises einzukalkulieren, ist es zweckmäßig, die Verlustleistung PV in der Summe mechanischer Leistung und Verlustleistung, die größer Null sein soll, mit einem Faktor k multiplikativ zu verknüpfen, der zwischen 0 und 1, vorzugsweise zwischen 0 und 0,8 liegt. Es ist zweckmäßig nur bis zu 80 % der Verlustleistung als Bremsleistung zu nutzen, um Fertigungstoleranzen und Temperaturschwankungen während des Betriebs zu berücksichtigten. Auch bei einer solchen Ansteuerung kann die Kapazität des Zwischenreizkondensators im Vergleich zu bekannten Frequenzumrichtern ganz erheblich verringert werden, wobei sich Kosten und Baugröße verringern.

Frequenzumrichter der in Rede stehenden Art, welche in großer Stückzahl für Motoren kleiner Leistung eingesetzt werden, sind üblicherweise mit einer Spannungs/Frequenz-Kennliniensteuerung (Scalar-Control) ausgestattet, da eine solche Steuerung einfach und kostengünstig ist. Für das erfindungsgemäße Verfahren ist es jedoch zweckmäßig den Frequenzumrichter über eine vergleichsweise aufwändige feldorientierte Steuerung, nämlich eine Vektorregelung (Vector-Control) anzusteuern. Eine solche Vektorregelung ermöglicht eine vergleichsweise genauere Steuerung des Motormomentes, so dass auf diese Weise auch die erfindungsgemäße Leistungssteuerung erfolgen kann. Die aktuelle Drehzahl des Motors steht frequenzumrichterseitig stets zur Verfügung. Zwar ist das Vorsehen einer Vektorregelung steuerungsseitig aufwändiger als die bisher in diesem Bereich eingesetzten Regelungen, doch hat sich überraschenderweise gezeigt, dass die durch die Minimierung des Zwischenkreiskondensators hierbei entstehenden Kosten- und Raumeinsparungen den Nachteil der aufwändigeren Regelung deutlich überwiegen. Eine gewisse Sicherheit gegen Überlastungen der Zwischenkreiskapazität und damit des gesamten Frequenzumrichters kann bei einer solchen Vektorregelung, bei der das Motormoment gezielt angesteuert werden kann, auch dadurch erreicht werden, dass der Motor stets mit einem Moment angesteuert wird, das gleich oder größer Null ist.

Kommt es hingegen auch darauf an, den Motor elektrisch abzubremsen, dann kann es sinnvoll sein, diesen entweder ständig oder zumindest eine gewisse Zeit vor dem Abbremsvorgang mit einer erhöhten Verlustleistung anzusteuern, da dann diese erhöhte Verlustleistung quasi als Bremsleistung zur Verfügung steht. Ungeachtet dessen können auch elektrische Bremsverfahren angewandt werden, die auf dem Gedanken basieren, keine Energie in den Zwischenkreis einzuspeisen, ähnlich wie es beispielsweise aus dem US-Patent 4,625,159 bekannt ist.

Der vorrichtungsmäßige Aufbau eines Motoraggregats mit integriertem Frequenzumrichter, insbesondere eines Kreiselpumpenaggregats mit einem frequenzumrichtergesteuerten Asynchronmotor als solcher ist bekannt. Zur Durchführung des erfindungsgemäßen Verfahrens ist also lediglich der Frequenzumrichter zu modifizieren, und zwar dahingehend, dass eine Vektorregelung vorgesehen wird, die an sich ebenfalls bekannt ist. Die Regelung erfolgt dann derart, dass der Motor stets mit einem Drehmoment angesteuert wird, das gleich oder größer Null ist.

Da der Zwischenkreiskondensator nicht nur als Puffer für die vom Motor in den Frequenzumrichter rückgespeiste Energie, sondern auch als Puffer für die vom Gleichrichter in den Zwischenkreis gelangende Energie, insbesondere Spannungs- und Stromspitzen vorgesehen ist, ist in einer Weiterbildung der Erfindung ein Schalter zwischen Gleichrichter und Zwischenkreis vorgesehen, der beim Überschreiten eines vorbestimmten Stroms den Gleichrichter vom Netz trennt.

Der Zwischenkreis des erfindungsgemäßen Kreiselpumpenaggregats ist vorteilhaft nur zur Aufnahme der von der Kommutierung ausgehenden Energien dimensioniert, d.h. weder für Energien, die vom Motor rückfließen noch für Energien, die vom Gleichrichter in nicht gewünschter Größe kommen. Damit kann nicht nur der Zwischenkreiskondensator, sondern auch der hierzu üblicherweise parallel geschaltete Leistungswiderstand oder Chopper minimiert werden oder vollständig entfallen. Um die von der Kommutierung ausgehenden Energien aufnehmen zu können, ist vorzugsweise ein Folienkondensator geeigneter Kapazität vorzusehen.

Da der Schalter, der den Gleichrichter vom Versorgungsnetz trennt, wenn die vom Gleichrichter in den Zwischenkreis gelangende Energie ein vorbestimmtes Maß übersteigt, eine gewisse Trägheit aufweist (bei softwareimplementierten Lösungen durch die Rechenzeit bedingt), kann es erforderlich sein, trotz dieser Vorkehrungen einen weiteren Energiepuffer im Zwischenkreis vorzusehen. Ein solcher kann jedoch verglichen mit bekannten Choppern vergleichsweise klein dimensioniert werden. Es wird hier bevorzugt ein Elektrolytkondensator kleiner Kapazität mit vorgeschalteter Diode eingesetzt und parallel zum Elektolytkondensator ein Leistungswiderstand oder auch anderer Verbraucher, wie beispielsweise die Energieversorgung für die Steuer- und Regelungselektronik.

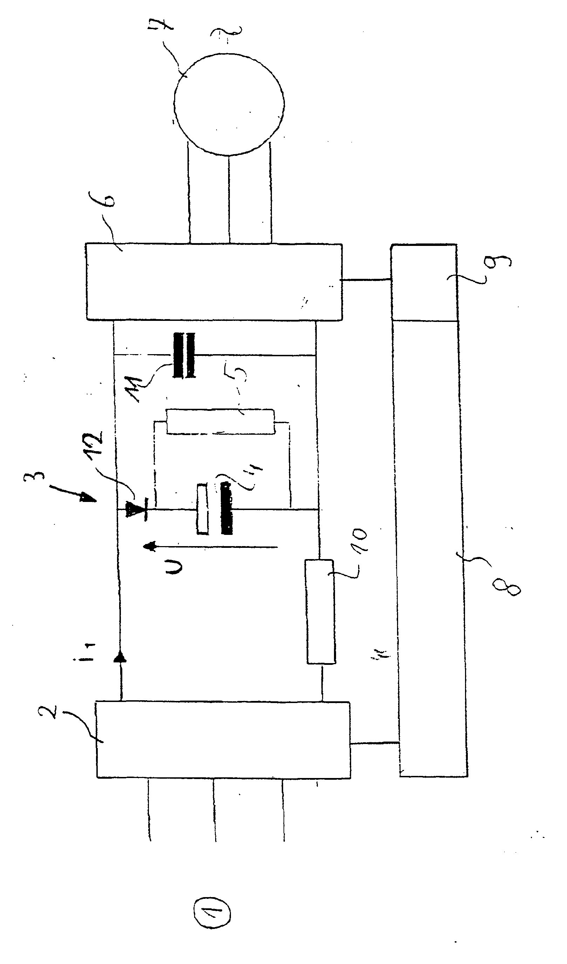

Dervorrichtunsmäßige Aufbau der Erfindung ist nachfolgend anhand einer Zeichnung dargestellt. Die einzige Figur zeigt stark vereinfachtes Blockschaltbild eines Frequenzumrichters mit Motor.

Der in der Figur dargestelle Frequenzumrichter wird von einem elektrischen Drehstromnetz 1 gespeist. Der Eingangskreis des Frequenzumrichters ist in üblicher Weise durch einen Gleichrichter 2 gebildet. Der Zwischenkreis 3 besteht aus einem Zwischenkreiskondensator 11 in Form eines Folienkondensators sowie einen parallel dazu geschalteten Energiepuffer in Form eines Elektrolytkondensators 4 mit parallel geschaltetem Leistungswiderstand 5, die über eine Diode 12 parallel zum Zwischenkreiskondensator 11 liegen. Der Leistungswiderstand 5 kann auch durch einen Chopper oder anderem Verbraucher ersetzt sein.

An den Zwischenkreis 3 schließt sich der Leistungskreis in Form eines Umrichters 6 an, welcher einen Asynchronmotor 7 speist. Gesteuert wird der Frequenzumrichter durch eine Steuer- und Regelungselektronik 8.

Um den Zwischenkreis 3 möglichst klein dimensionieren zu können, d. h. die Größe des Zwischenkreiskondensators 11 zu minimieren und den Energiepuffer 4,5,12 klein zu halten bzw. völlig verzichtbar zu machen, weist der Frequenzumrichter eine Vektorregelung 9 als Teil der Steuer- und Regelungselektronik 8 auf, welche den Motor 7 stets, d.h. nicht nur beim Beschleunigen, sondern auch beim Auslaufen mit einem Drehmoment ansteuert, das größer oder gleich Null ist. Hierdurch wird sichergestellt, dass vom Motor 7 keine Energie in den Wechselrichter 6 und somit in den Zwischenkreis 3 gespeist wird. Lediglich die kommutierungsbedingten Energiespitzen gelangen in den Zwischenkreis 3 und sind vom Zwischenkreiskondensator 11 aufzunehmen. Dem Gleichrichter 2 ist eine Sicherheitsschalteinrichtung10 nachgeordnet, welche den Gleichrichter 2 vom Netz 1 trennt, sobald der Strom i1 einen vorbestimmten Wert überschreitet. Hierdurch wird sichergestellt, dass vom Gleichrichter 2 aus keine unzulässig hohen Energien in den Zwischenkreis 3 eingespeist werden. Da die Sicherheitsschalteinrichtung 10 eine, wenn auch geringe Schaltverzögerung systembedingt aufweist, können kurzzeitig auch Energiespitzen vom Gleichrichter 2 in den Zwischenkreis 3 gelangen. Um diese aufzunehmen, ist der Energiepuffer bestehend aus dem Elektrolytkondensator 4, dem Leistungswiderstand 5 sowie der diesen vorgeschalteten Diode 12 vorgesehen.

## Patentansprüche

1. Verfahren zum Betreiben eines frequenzumrichtergesteuerten Elektromotors (7) einer Kreiselpumpe, bei dem der Frequenzumrichter über eine Vektorregelung angesteuert wird, **dadurch gekennzeichnet, dass** der Motor (7) stets, das heißt nicht nur beim Beschleunigen, sondern auch beim Auslaufen, so angesteuert wird, dass die Summe aus seiner mechanischen Leistung PM und seiner Verlustleistung PV größer Null ist, indem der Motor (7) mit einem Motormoment angesteuert wird, das stets gleich oder größer Null ist.

2. Verfahren nach Anspruch 1, **dadurch gekennzeichnet, dass** der Motor (7) stets so angesteuert wird, dass die Summe aus seiner mechanischen Leistung PM und dem Produkt seiner Verlustleistung PV und einem Faktor k größer Null ist, wobei k zwischen 0 und 1 liegt, vorzugsweise zwischen 0 bis 0,8 .

3. Kreiselpumpenaggregat mit einem frequenzumrichtergesteuerten Asynchronmotor (7), bei dem ein Frequenzumrichter mit Vektorregelung (9) vorgesehen ist, **dadurch gekennzeichnet, dass** die Regelung derart erfolgt, dass der Motor (7) stets, das heißt nicht nur beim Beschleunigen, sondern auch beim Auslaufen, so angesteuert wird, dass die Summe aus seiner mechanischen Leistung PM und seiner Verlustleistung PV größer Null ist, indem der Motor (7) mit einem Motormoment angesteuert wird, das stets gleich oder größer Null ist.

4. Kreiselpumpenaggregat nach Anspruch 3, **dadurch gekennzeichnet, dass** der Frequenzumrichter einen Gleichrichter (2), einen Zwischenkreis (3) und einen Wechselrichter (6) aufweist, sowie eine Steuer- und Regelungselektronik (8), wobei eine Schalteinrichtung (10) zwischen Gleichrichter (2) und Zwischenkreis (3) vorgesehen ist, die beim Überschreiten eines vorbestimmten Stroms (i**1**), die Verbindung zum Gleichrichter (2) trennt.

5. Kreiselpumpenaggregat nach einem der vorhergehenden Ansprüche 3-4, **dadurch gekennzeichnet, dass** der Zwischenkreis (3) nur zur Aufnahme der von der Kommutierung ausgehenden Energien dimensioniert ist.

6. Kreiselpumpenaggregat nach einem der vorhergehenden Ansprüche 3-5, **dadurch gekennzeichnet, dass** der Zwischenkreis (3) zur Aufnahme der von der Kommutierung ausgehenden Energien einen Kondensator, insbesondere einen Folienkondensator (11) aufweist.

7. Kreiselpumpenaggregat nach einem der vorhergehenden Ansprüche 3-6, **dadurch gekennzeichnet, dass** der Zwischenkreis (3), Mittel (4,5,12) zur Aufnahme und Ableitung von aus dem Gleichrichter (2) kommenden Spannungs- und/oder Stromspitzen aufweist.

8. Kreiselpumpenaggregat nach einem der vorhergehenden Ansprüche 3-7, **dadurch gekennzeichnet, dass** die Mittel zur Aufnahme und Ableitung von aus dem Gleichrichter (2) kommenden Spannungs- und/oder Stromspitzen durch einen Kondensator (4) mit parallel geschaltetem Verbraucher (5) gebildet sind, denen ein Gleichrichterelement (12) vorgeschaltet ist, wobei der Kondensator vorzugsweise ein Elektrolytkondensator (4) ist.

9. Kreiselpumpenaggregat nach Anspruch 8, **dadurch gekennzeichnet, dass** der Verbraucher (5) durch die Energieversorgung für die Steuer- und Regelelektronik (8) gebildet ist.

## Claims

1. A method for operating a frequency-converter-controlled electric motor (7) of a centrifugal pump, with which the frequency converter is activated via a vector [closed-loop] control, **characterised in that** the motor (7) always, which means to say not only on accelerating, but also on running down, is activated such that the sum of its mechanical power PM and its loss power PV is greater than zero, by way of the motor (7) being activated with a motor moment which is always equal to or greater than zero.

2. A method according to claim 1, **characterised in that** the motor (7) is always activated such that the sum of its mechanical power PM and of the product of its loss power PV and a factor k is greater than zero, wherein k lies between 0 and 1, preferably between 0 and 0.8.

3. A centrifugal pump assembly with a frequency-converter-controlled asynchronous motor (7), with which a frequency converter is provided with a vector control (9), **characterised in that** the control is effected in a manner such that the motor (7) always, which means to say not only on accelerating, but also on running down, is activated such that the sum of its mechanical power PM and its loss power PV is greater than zero, by way of the motor (7) being activated with a motor moment which is always equal to or greater than zero.

4. A centrifugal pump assembly according to claim 3, **characterised in that** the frequency converter comprises a rectifier (2), an intermediate circuit (3) and an inverter (6), as well as control and regulation electronics (8), wherein a switch device (10) is provided between the rectifier (2) and the intermediate circuit (3) and separates the connection to the rectifier (2) on exceeding a predefined current (i1).

5. A centrifugal pump assembly according to one of the preceding claims 3-4, **characterised in that** the intermediate circuit (3) is only dimensioned for receiving energies coming from the commutation.

6. A centrifugal pump assembly according to one of the preceding claims 3-5, **characterised in that** the intermediate circuit (3) comprises a capacitor, in particular a foil capacitor (11), for receiving the energies coming from the commutation.

7. A centrifugal pump assembly according to one of the preceding claims 3-6, **characterised in that** the intermediate circuit (3) comprises means (4, 5, 12) for receiving and leading away voltage and/or current peaks coming from the rectifier (2).

8. A centrifugal pump assembly according to one of the preceding claims 3-7, **characterised in that** the means for receiving and leading away voltage and/or current peaks coming from the rectifier (2) are formed by a capacitor (4) with consumers (5) connected in parallel, to which a rectifier element (12) is connected in front in series, wherein the capacitor is preferably an electrolyte capacitor (4).

9. A centrifugal pump assembly according to claim 8, **characterised in that** the consumer (5) is formed by the energy supply for the control and regulation electronics (8).

## Revendications

1. Procédé pour faire fonctionner un moteur (7) de pompe centrifuge commandé par un convertisseur de fréquence, dans lequel le convertisseur de fréquence est commandé par une régulation vectorielle, **caractérisé en ce que** le moteur (7) est commandé en permanence, c'est-à-dire non seulement pendant l'accélération mais aussi pendant la mise à l'arrêt, de telle manière que la somme de sa puissance mécanique PM et de sa puissance dissipée PV soit supérieure à zéro, du fait que le moteur (7) est commandé avec un couple de moteur qui est toujours égal ou supérieur à zéro.

2. Procédé selon la revendication 1, **caractérisé en ce que** le moteur (7) est toujours commandé de telle manière que la somme de sa puissance mécanique PM et du produit de sa puissance dissipée PV par un facteur k soit supérieure à zéro, k étant compris entre 0 et 1, de préférence entre 0 et 0,8.

3. Groupe pompe centrifuge équipé d'un moteur asynchrone (7) commandé par un convertisseur de fréquence, dans lequel un convertisseur de fréquence est muni d'une régulation vectorielle (9), **caractérisé en ce que** la régulation s'effectue de telle manière que le moteur (7) soit commandé en permanence, c'est-à-dire non seulement pendant l'accélération mais aussi pendant la mise à l'arrêt, de telle manière que la somme de sa puissance mécanique PM et de sa puissance dissipée PV soit supérieure à zéro, du fait que le moteur (7) est commandé avec un couple de moteur qui est toujours égal ou supérieur à zéro.

4. Groupe pompe centrifuge selon la revendication 3, **caractérisé en ce que** le convertisseur de fréquence comprend un redresseur (2), un circuit intermédiaire (3) et un onduleur (6), ainsi qu'une électronique de commande et de régulation (8), un dispositif de commutation (10) prévu entre le redresseur (2) et le circuit intermédiaire (3) coupant la connexion arrivant au redresseur (2) en cas de dépassement d'un courant prédéterminé (i1).

5. Groupe pompe centrifuge selon l'une des revendications 3 et 4, **caractérisé en ce que** le circuit intermédiaire (3) n'est calculé que pour recevoir les énergies issues de la commutation.

6. Groupe pompe centrifuge selon l'une des revendications 3 à 5, **caractérisé en ce que** le circuit intermédiaire (3) présente un condensateur, en particulier un condensateur à diélectrique plastique (11), destiné à recevoir les énergies issues de la commutation.

7. Groupe pompe centrifuge selon l'une des revendications 3 à 6, **caractérisé en ce que** le circuit intermédiaire (3) présente des moyens (4, 5, 12) destinés à recevoir et dévier les pics de tension et/ou de courant provenant du redresseur (2).

8. Groupe pompe centrifuge selon l'une des revendications 3 à 7, **caractérisé en ce que** les moyens destinés à recevoir et dévier les pics de tension et/ou de courant provenant du redresseur (2) sont constitués par un condensateur (4) avec un consommateur (5) connecté en parallèle, en amont desquels est connecté un élément redresseur (12), le condensateur étant de préférence un condensateur électrolytique (4).

9. Groupe pompe centrifuge selon la revendication 8, **caractérisé en ce que** le consommateur (5) est constitué par l'alimentation en énergie de l'électronique de commande et de régulation (8).
